**Europäisches Patentamt**

**European Patent Office**

**Office européen des brevets**

(19)

(11) Publication number: **0 040 442**
**B1**

(12) **EUROPEAN PATENT SPECIFICATION**

(45) Date of publication of patent specification: **24.08.83**

(51) Int. Cl.³: **E 21 B 43/00**

(21) Application number: **81200453.9**

(22) Date of filing: **24.04.81**

(54) Method of treating wells with self-precipitating scale inhibitor.

(30) Priority: **16.05.80 US 150382**

(43) Date of publication of application:
**25.11.81 Bulletin 81/47**

(45) Publication of the grant of the patent:
**24.08.83 Bulletin 83/34**

(84) Designated Contracting States:
**DE GB NL**

(56) References cited:
**GB - A - 1 078 765**
**US - A - 3 043 772**
**US - A - 3 372 110**
**US - A - 3 661 785**
**US - A - 3 668 094**
**US - A - 3 699 048**
**US - A - 3 703 928**
**US - A - 3 888 310**
**US - A - 3 913 678**
**US - A - 3 927 716**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Berkshire, David Clark**
**9713 Mariposa**
**Houston Texas 77025 (US)**
Inventor: **Lawson, Jimmie Brown**
**4626 Briarbend**
**Houston Texas 77035 (US)**
Inventor: **Richardson, Edwin Allen**
**3739 Carlon Street**
**Houston Texas 77005 (US)**

(74) Representative: **Puister, Antonius Tonnis, Mr. et al,**
**P.O. Box 302**
**NL-2501 CH The Hague (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

# 0 040 442

## Method of treating wells with self-precipitating scale inhibitor

Relatively low concentrations of water-soluble, organic scale inhibitors are known to reduce the rate of scale formation in and around the bottom of a producing well. Scales are slightly soluble inorganic salts, such as calcium or barium sulphates or calcium carbonate, etc. The mechanism of the inhibition is probably a combination of sequestering or complexing of multivalent cations and an absorption of inhibitor onto solid surfaces such as the rapid growth planes of newly formed crystallites. Although a wide variety of materials inhibit crystal growth, the compounds most commonly used in well treatments are organic phosphates or phosphonates or adducts of acrylic acid or the like. Where super-saturated or scale-forming waters are encountered in an oil production operation, scale inhibitors are commonly injected or "squeezed" into the reservoir formation. The squeezing amounts to injecting the inhibitor and, usually, overflushing the treated zone with water. The well is placed back on production and the entrainment of the inhibitor in the produced water protects the wellbore and downhole equipment from scale build-up.

The squeezing is a convenient way to apply an inhibitor since there is no injection equipment to install or maintain. It is known to be generally desirable that a scale inhibitor be produced in low concentrations within the produced water, such as from about 25 to 100 parts per million. But, this goal is almost never achieved. Generally, most of the injected inhibitor is quickly produced. Various attempts to delay the rate of its production, such as causing it to be adsorbed on the rock surfaces, are only partially successful. And, this has also been true of prior attempts to induce the precipitation within the reservoir of slightly soluble multivalent cation salts of the inhibitor.

For example, U.S.A. patent specification No. 3,483,925 (inventor: J.V. Slyker, filed 6.2.68, published 16.12.69) mentions the problems of obtaining a gradual and uniform return of a squeezed-in inhibitor and proposes the injection of alternating slugs of inhibitor solution and a polymer-thickened solution. U.S.A. patent specification No. 3,633,672 (inventors: T.J. Nolan III, C.F. Smith, filed: 11.5.70, published 11.1.72.) proposes injecting an inhibitor which forms multivalent cation salts which are only slightly soluble in substantially neutral or alkaline water with both the inhibitor and a compound containing multivalent cations dissolved in an acidic aqueous liquid, so that the relatively insoluble salt of the inhibitor is precipitated when the acid is neutralized within the reservoir by the basic constituents thereof. U.S.A. patent specification No. 3,704,750 (inventors: L.H. Miles, G. E. King; filed 25.11.69, published 5.12.72) suggests injecting a strongly acidic solution of a monovalent cation salt of polyacrylic acid or amide and a salt of a multivalent cation, to cause a similar precipitation of an inhibitor of low solubility when the acid is neutralized within the reservoir. U.S.A. patent specification No. 3,782,469 (inventor: R. S. Fulford; filed 25.5.72; published 1.1.74) proposes that an inhibitor be adsorbed on fracture-propping grains which are then emplaced within a fracture in the reservoir in order to provide a reliably coated source of surfaces from which the inhibitor is desorbed.

An object of the invention is a method for treating wells with self-precipitating scale inhibitors that can be used in any type of reservoir and will work well in siliceous reservoirs, as well as in reservoirs with components that generate either high or low pH in the fluid contents thereof.

The method according to the invention comprises the steps of:

compounding an aqueous solution consisting essentially of water, at least one compound containing scale-inhibiting anions, at least one compound containing multivalent cations, sufficient alkaline material to provide a solution pH exceeding the pH at which a compound composed of those scale-inhibiting anions and multivalent cations will begin to precipitate at the reservoir temperature, and enough of at least one compound which reacts to yield hydrogen ions at a relatively slow rate to subsequently reduce the solution pH to one at which said precipitation will begin; and

injecting the solution into the reservoir at a rate and volume arranged so that (a) substantially all of the solution enters the reservoir before the occurrence of any significant amount of said precipitation and (b) a significant amount of said precipitation occurs while the solution is in a near-well location within the reservoir.

The invention will be described by way of example in more detail with reference to the attached drawings.

Figure 1 of the drawings shows a plot of the regions of calcium concentrations (along the Y-axis in mol./litre) and pH's (along the X-axis) which cause a calcium salt of a particular scale inhibitor to be precipitated from various solutions at various temperatures.

Figure 2 shows a plot of the concentrations (in ppm along the Y-axis) at which various scale inhibitors are produced from a rock formation by the flow of various amounts of an aqueous liquid (in ml along the X-axis) through that formation.

Figure 3 shows the variations with initial solution pH (along the Y-axis) in the times (in minutes along the X-axis) at which precipitates will form within the present solution.

Figure 4 shows such variations with temperatures (in °C along the Y-axis).

Figure 5 shows the variations with amount of fluid outflow (in cubic centimetres along the X-axis) of the concentration of a scale inhibitor (in ppm phosphate ion along the Y-axis) which was deposited by the present process, within a sand pack through which fluid is flowed.

2

In the present process the scale inhibitor to be used should be one which (a) is capable of preventing scaling by the fluid produced from the reservoir at the reservoir temperature when it is present in the aqueous phase of that fluid in a relatively low concentration of not significantly more than about 100 parts per million and (b) forms multivalent cation salts having water solubilities which are significantly less at a pH of not more than about 10 than at a pH of from about 10 to 14.

In the present process the pH at which the inhibitor-containing solution is flowed into the well and the rate at which its pH is reduced should be correlated relative to the injectivity and temperature properties of the well and the reservoir. Such factors should be correlated at least to the extent required to avoid any significant amount of premature precipitation (before the solution has entered the reservoir) or an unduly delayed precipitation (requiring a long wait after the solution has entered the reservoir).

The initial alkalinity of the inhibitor-containing solution can be provided by one or a combination of alkaline compounds or materials. Substantially any water-soluble materials which are compatible with the other components and the scale inhibitor-precipitation reaction can be used. The alkali metal hydroxides and/or the alkaline metal salts of the scale inhibitor being used are particularly suitable as such alkaline materials.

The means by which a premature precipitation is avoided may include: (a) the use of a pH-reducing compound which reacts very slowly at the surface temperature but reacts relatively rapidly at the reservoir temperature, (b) adding the pH-reducing reactant to the inhibitor-containing solution just before that solution flows into the well, (c) applying a relatively rapid injection rate while the inhibitor is being transported to the reservoir and a slow or intermittent or no flow thereafter after it has entered the reservoir, and (d) a buffering system which maintains the initial relatively high pH while the solution is being transported to the reservoir but is then overridden to allow a rapid pH reduction after the solution enters the reservoir, etc.

The means for ensuring a prompt precipitation of a significant amount of the inhibitor after the inhibitor-containing solution reaches the reservoir may include (a) buffering the pH at which the solution is injected at a value only slightly above one at which the precipitation occurs; (b) using a relatively high concentration of pH-lowering reactant which is relatively unreactive at the reservoir temperature; (c) injecting a relatively large column of relatively dilute inhibitor-containing solution so that a significant deposit of precipitate is built up by the flowing of a relatively large volume of the solution through the zone around the well, etc.

In general, the multivalent cation salts of numerous scale inhibitors (such as the organo-phosphorous-type scale inhibitors) have solubilities which increase with increasing alkalinity within an aqueous liquid, for example, due to an increase in the complexing ability of the inhibitor as the pH is raised. Substantially any such inhibitors which are compatible with the other components of the present type of inhibitor solution can be used in the present process. A pH increase may also suppress the concentration of the particular inhibitor ionic species which combines with the multivalent cation to form the precipitate, so that this results in a lowering of the ion product of the insoluble salt.

Preferred scale inhibitors for use in the present process comprise members of the group consisting of phosphate and phosphonate scale inhibitors, And, particularly suitable inhibitors for use in the present invention comprise nitrogen-containing phosphonate scale-inhibiting compounds such as the nitrilo-tri(methylene phosphonic acid) or diethylenetri-aminepenta(methylene phosphonic acid) which are available from Monsanto Chemical Company under the trade names Dequest 2000 and Dequest 2060. Other suitable inhibitors include Dequest 2010, 2041 and 2051 inhibitors. Tests of calcium salts of Dequest 2060 as precipitated from the present self-precipitating scale inhibition solutions have shown that they prevent precipitation of $CaSO_4$ and $CaCO_3$ minerals from waters supersaturated with such minerals.

In general, a buffering system suitable for use in the present invention is one which is compatible with the inhibitor solution components and is capable of maintaining the relatively high pH at which the inhibitor is soluble until a solution has been transported from the surface to the reservoir and then allowing the pH of the solution to be relatively rapidly reduced by the hydrogen ions produced by the pH-reducing reactant. For example, with respect to the Dequest 2060 inhibitor, a substantially ideal buffer would have a $pK_a$ of about 7.5 to 8.5, which would permit a relatively long delay time and would require only a relatively low concentration of buffer and pH-reducing reactant (such as methyl formate). However, sodium bicarbonate ($pK_a$ about 6.4) and glycine ($pK_a$ about 9.5) have been found to be generally suitable in view of their compatibility, operability and relatively low cost and high availability. A buffer having a desirable $pK_a$ may fail to be compatible with the inhibitor-solution components. For example, 1,3-diaminopropane ($pK_a$ about 8.5) tends to produce a cloudy solution at an initial solution pH as low as about 9.

In the present inhibitor solutions, methyl formate undergoes a relatively rapid hydrolysis at a reservoir temperature in the order of 38°C (yielding one mole each of methyl alcohol and formic acid for each mole of the ester). In a solution containing the calcium salt of the Dequest 2060 inhibitor, at an initial pH of about 8, the rate of decomposition of methyl formate is dependent principally on temperature. Table I shows the precipitation times for various solutions that each contain 0.05 moles per litre of the Dequest inhibitor and 0.17 moles per litre of calcium ions at a reaction temperature of

3

38°C. That temperature is typical of various wells needing such a scale inhibitor treatment, and, in those wells, a time of initiation of the precipitation of about 2 hours is generally adequate for pumping the solution into the formation. In those wells, the solution No. 7 is a particularly suitable formulation.

TABLE I

Characteristics of the calcium-dequest 2060-glycine-methyl formate system

| Solution numbers | Methyl formate (mol./l) | Minutes to ppt | pH at start of ppt | Total minutes of run | pH at end of run | Total ppt at end run, g/l | % Dequest precipi-tated |
|---|---|---|---|---|---|---|---|
| 1 | 0.20 | 35 | 7.2 | 1020 | 5.8 | 29.1 | 100 |
| 2 | 0.25 | 40 | 7.2 | 1200 | 5.7 | 29.6 | 100 |
| 3 | 0.30 | 30 | 7.2 | 3800 | 4.9 | 24.6 | 86 |
| 4 | 0.36 | 20 | 7.2 | 1040 | 5.3 | 24.7 | 86 |
| 5 | 0.33 | No ppt | · · · · · pH steady at 7.8 after 100 minutes . . . . . . . . . . | | | | | |
| 6 | 0.37 | 300 | 6.5 | 1200 | 6.1 | 19.4 | 68 |
| 7 | 0.47 | 120 | 6.5 | 960 | 5.8 | 23.4 | 82 |

In general, as indicated above, a particularly suitable buffer would be one having a $pK_a$ of from about 7.5 to 8.5 that would permit a relatively long delay times at much lower concentrations of the buffer and methyl formate that those needed for glycine which has a $pK_a$ of about 9.5. Sodium bicarbonate and glycine are suitable buffers because they are effective and appear to provide no interfering side reactions. Examples of other suitable buffer compounds or systems include potassium or lithium bicarbonate, triethanolamine, etc.

In a well-treating operation involving an injection of an aqueous liquid, it is generally preferable to use the brine present within the reservoir or an aqueous solution substantially equivalent to that brine in kinds and amounts of multivalent and monovalent ions. The salt contents of various typical oilfield brines from wells in which scaling problems occur and which wells could advantageously be treated by an inhibitor squeeze operation are listed in Table II.

The solubilities of the calcium salt of Dequest 2060 inhibitor in the same brines are listed in Table III. For such salts to inhibit scaling, they must be soluble enough to maintain at least a low level of the inhibitor in the solution and, as indicated in Table III such solubilities were exhibited by each of the tested brines.

TABLE II
Analyses of brines produced from wells in Texas

| Well No. 1 | | | Well No. 2 | | | Well No. 3 | | |
|---|---|---|---|---|---|---|---|---|
| Ion | mg/litre | mol./litre | Ion | mg/litre | mol./litre | Ion | mg/litre | mol./litre |
| Cl | 49,500 | 1.394 | Cl | 86,000 | 2.423 | Cl | 105,500 | 2.972 |
| Ca | 3,360 | 0.084 | Ca | 6,120 | 0.153 | Ca | 13,040 | 0.326 |
| Mg | 753 | 0.031 | Mg | 1,288 | 0.053 | Mg | 1,774 | 0.073 |
| $HCO_3$ | 610 | 0.010 | $HCO_3$ | 610 | 0.010 | $HCO_3$ | 366 | 0.006 |
| $SO_4$ | 3,350 | 0.035 | $SO_4$ | 5,150 | 0.054 | $SO_4$ | 1,800 | 0.019 |
| Na | 28,589 | 1.243 | Na | 48,898 | 2.126 | Na | 50,968 | 2.216 |

### TABLE III
Solubilities of calcium dequest salts in representative field brines at 38°C

| Brine | Cation | Inhibitor | pH | Solubility ppm |
|---|---|---|---|---|
| Well 1 | Calcium | Dequest 2060 | 5.97 | 540 |
| " | " | " | 6.55 | 529 |
| " | " | " | 7.05 | 518 |
| " | " | " | 7.50 | 518 |
| Well 2 | " | " | 5.97 | 488 |
| " | " | " | 6.50 | 540 |
| " | " | " | 6.98 | 492 |
| " | " | " | 7.55 | 400 |
| Well 3 | " | " | 5.97 | 437 |
| " | " | " | 6.50 | 448 |
| " | " | " | 7.03 | 422 |
| " | " | " | 7.55 | 400 |

It should be noted that in Table II the concentrations of both calcium and magnesium ions increased in the tested brines, in the order of Well Nos. 1, 2, 3. Because of this, the common ion effect would be expected to decrease the solubility of the salts in the same order and this is indicated in the data in Table III.

But, note that a different result is indicated by the data in Table IV. Since the downhole pH of a brine is usually an unknown quantity (since only cooled and degassed samples are usually subjected to pH measurements) a series of samples of the same brines were adjusted to pH's 6.0, 6.5, 7.0 and 7.5. In separate tests, calcium and magnesium salts of each of the inhibitors Dequest 2000 and 2060 were added to such samples and stirred intermittently at 38°C for 7 to 13 days after which the precipitates were filtered out on 0.45 micron acetate filters and the filtrates were analyzed for phosphorus, in order to determine the concentrations of the inhibitor. These tests indicated a reversal of the solubility orders between the calcium and magnesium salts. Although the common ion effect (due to the increasing concentrations of calcium and magnesium in the brines 1, 2, 3) decreased the solubility of the salts in the same order regarding Dequest 2060, this was not true regarding Dequest 2000. Such complications may be due to the fact that any anionic inhibitor which goes into solution from a salt will be complexing with its non-common ion (e.g., some of the inhibitor from a calcium salt will complex with the magnesium in solution). This makes for a very complicated interaction in which simple predictions are not necessarily realized in fact. In addition, since the indicated pH's were measured at room temperature, the values were probably shifted at 38°C. Further, the solution of the weak acid inhibitor anions would also shift the pH's as they neared equilibrium.

TABLE IV
Solubilities of calcium and magnesium dequest salts in representative field brines at 38°C

| Brine | Cation | Inhibitor | Set pH | (ppm) | Brine | Cation | Inhibitor | Set pH | (ppm) |
|---|---|---|---|---|---|---|---|---|---|
| 1 | Calcium | Dequest 2060 | 5.97 | 540 | 1 | Calcium | Dequest 2000 | 6.05 | 302 |
| | | | 6.55 | 529 | | | | 6.50 | 437 |
| | | | 7.05 | 518 | | | | 7.03 | 437 |
| | | | 7.50 | 518 | | | | 7.50 | 391 |
| 2 | Calcium | " | 5.97 | 488 | 2 | Calcium | " | 5.90 | 374 |
| | | | 6.50 | 540 | | | | 6.50 | 410 |
| | | | 6.98 | 492 | | | | 7.00 | 368 |
| | | | 7.55 | 400 | | | | 7.54 | 368 |
| 3 | Calcium | " | 5.97 | 437 | 3 | Calcium | " | 6.02 | 387 |
| | | | 6.50 | 448 | | | | 6.45 | 532 |
| | | | 7.03 | 422 | | | | 7.00 | 407 |
| | | | 7.55 | 400 | | | | 7.48 | 420 |
| 1 | Magnesium | Dequest 2060 | 6.00 | 370 | 1 | Magnesium | Dequest 2060 | 6.03 | 460 |
| | | | 6.50 | 374 | | | | 6.50 | 374 |
| | | | 7.02 | 370 | | | | 6.95 | 427 |
| | | | 7.48 | 366 | | | | 7.48 | 335 |
| 2 | Magnesium | " | 6.03 | 407 | 2 | Magnesium | " | 6.00 | 387 |
| | | | 6.50 | 381 | | | | 6.52 | 345 |
| | | | 7.00 | 392 | | | | 7.02 | 345 |
| | | | 7.50 | 377 | | | | 7.50 | 322 |
| 3 | Magnesium | " | 6.00 | 366 | 3 | Magnesium | " | 6.02 | 361 |
| | | | 6.50 | 374 | | | | 6.50 | 348 |
| | | | 7.03 | 366 | | | | 7.00 | 328 |
| | | | 7.52 | 370 | | | | 7.52 | 348 |

0 040 442

**0 040 442**

In one procedure, determinations are made of the correlations between the inhibitor solution composition and the injectivity temperature and electrolyte properties of the well and reservoir. Such determinations include tests at least equivalent to, for example, emplacing the inhibitor salt in a core representative of the reservoir formation and then flowing an appropriate brine through the core at a rate and temperature representative of those involved in the production operation. In this manner, the effect of the brine pH can be relatively accurately evaluated by adjusting the pH of the so-flowed brine and analyzing the output. By using cores of the reservoir such a procedure can indicate any effects that might result from the interaction of the rock chemistry on the solubility of the inhibitor salts.

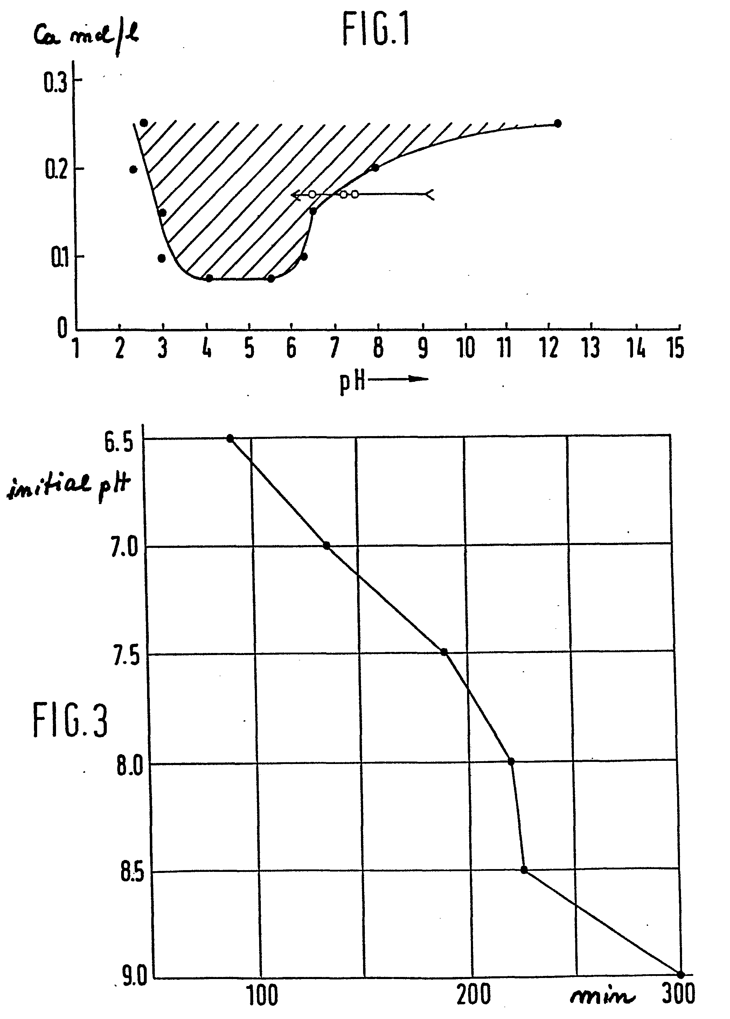

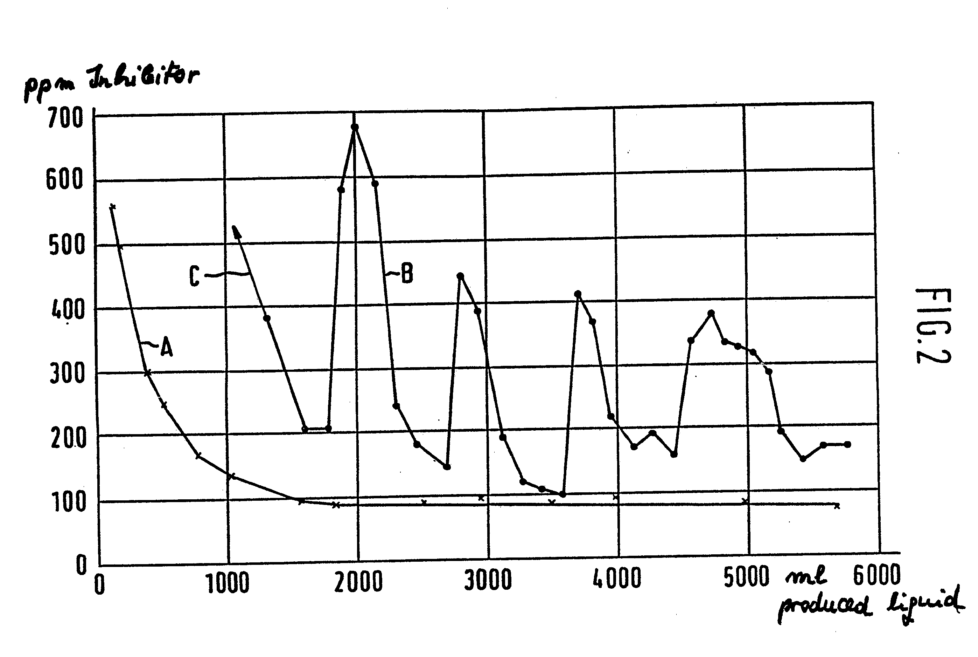

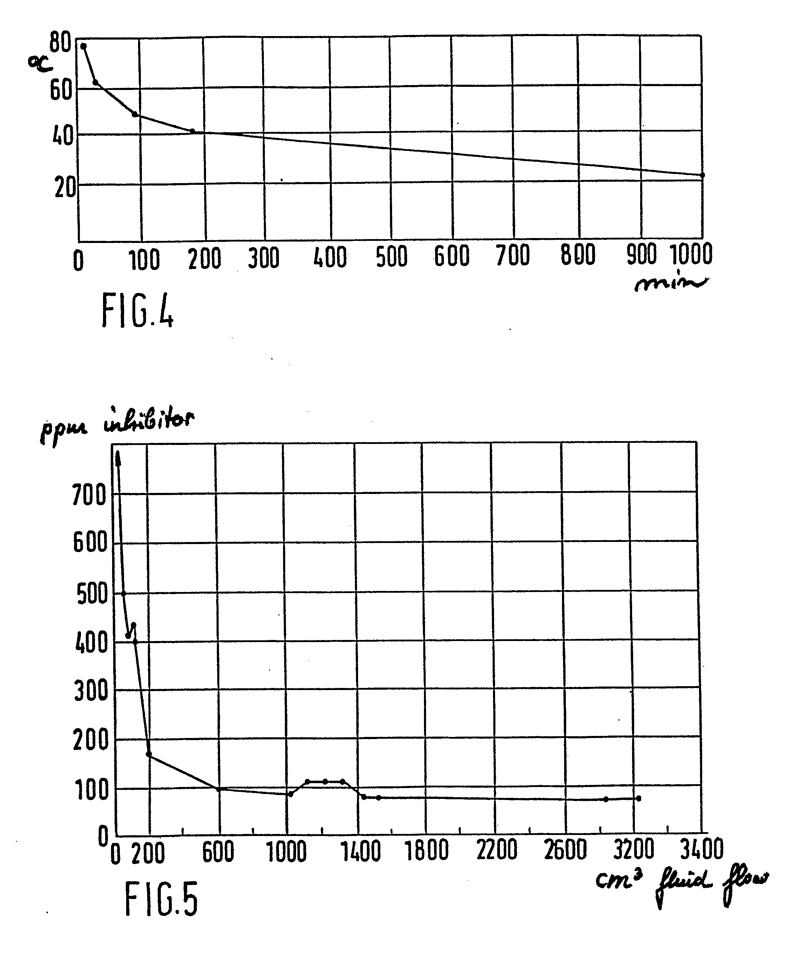

The pH-solubility relationship for a particular cation inhibitor combination depends on the mole ratio of cations to the inhibitor anions. With respect to calcium salts in a solution containing 0.05 mole per litre of the Dequest 2060 inhibitor such a relationship is shown in Figure 1 of the drawing. The diagram of Figure 1 shows the variations with the calcium concentration (in mol./litre along the Y-axis) of the pH (along the X-axis) which cause a calcium salt of a particular scale inhibitor to be precipitated from various solutions at various temperatures. The black dots indicate test results at room temperature with no glycine present. If a solution is made up to lie outside the shaded region and is then moved into it by a pH-changing reaction, precipitation will occur. The arrow depicts the pH course of an actual test, at 38°C, using methyl formate to provide a pH changing reaction which lowers the pH from 9.0 to 5.8 in 16 hours.

Comparative core tests were performed to evaluate the produced concentrations of (a) an inhibitor squeezed-in and precipitated in place, in accordance with the present process and (b) the inhibitor merely squeezed-in, in accordance with prior procedures. Since the ion exchange capacity of Berea sandstone is higher than that of many carbonates, these tests were not good models of such operations in carbonate reservoirs. There is apt to be significantly less difference in the results obtained from the tests in sandstones than there would be in carbonates, since more of the inhibitor would be precipitated by natural processes in the sandstone than in the carbonate.

A description of the core tests is contained in Table V. In experiments 1 and 2 the Berea sandstone cores (permeability $k_w = 170$ md; pore volume $V_p = 269$ and $263$ cm³, respectively) were first saturated with brines of the composition of that from well No. 2 in Table II and the inhibitor systems were injected, allowed to stand overnight, then backflowed by displacing them with brine of the same composition. Both tests were carried out at a temperature of 38°C.

TABLE V
Description of core tests

| Experiment | Inhibitor solution | Remarks |
|---|---|---|
| 1 | 0.05 M DQ2060 + 1 M Glycine | 1/2 $V_p$ (= 135 ml) inhibitor injected. |
| | + 0.47 M Methyl-formate | Core shut-in overnight |
| | | and backflowed with brine, Well #25 |
| 2 | 0.05 M DQ2060 | 1/2 $V_p$ inhibitor injected. |
| | | Core shut-in overnight |
| | | and backflowed with brine, Well #25 |

In experiment No. 1, one-half pore volume of an inhibitor system of the present invention was injected and shut in overnight (although the hydrolysis of the methyl formate should have been substantially complete within about 2 hours). In the backflowing of the core, the initial production rate was 10 ml per hour but, half-way through the experiment, this rate was increased to 160 ml per hour. Experiment No. 2 was performed in the same way except that the inhibitor system was merely 0.05 mole per litre of Dequest 2060 inhibitor in the Well No. 2 brine with no attempt being made to artificially precipitate any calcium Dequest.

Figure 2 shows the results of those experiments. The concentrations of the inhibitor (in ppm along the Y-axis) are plotted against the produced liquid (in ml along the X-axis). In experiment No. 1, in

8

accordance with the present process, the concentration of produced inhibitor very quickly declined (see curve A) to about 100 parts per million and remained there for the duration of the experiment (during which 6 litres or 22 pore volumes of liquid were produced). The initial produced concentration of inhibitor was 8510 ppm. During experiment No. 1 the amount of inhibitor produced was only 30% of the total amount of the inhibitor that was injected.

During experiment No. 2 (see curve B), in accordance with prior art procedures, the production of the inhibitor was erratic with alternately high and low levels of the inhibitor being present in the produced liquid. By the end of the experiment the material balance showed that 99% of the injected inhibitor was produced. The initial produced concentration of inhibitor was 40,185 ppm (see part C of Curve B).

It is apparent that the present type of self-induced precipitation of an inhibitor within a reservoir formation can serve to maintain relatively low levels of the inhibitor in the produced water for relatively long periods of time. Well treating service companies and users of phosphonate scale inhibitors such as the Dequest inhibitors believe that about 25 parts per million of the phosphonate are adequate. The concentration observed in experiment No. 1 were significantly greater than 25 parts per million but, at least in some instances, such a relatively high solubility of the multivalent salts of the inhibitor may prove to be desirable. In an actual field operation not all zones in the reservoir will accept equal amounts of the squeezed-in inhibitor solution. The higher permeability in the watered-out zones will cause them to take the bulk of such a solution. Therefore, when the well is produced, the inhibitor returns may be diluted within the wellbore and since not every well in a field will be squeezed, the inhibitor concentrations will be diluted at satellite stations and field treaters and problems may be avoided by a high concentration of inhibitor.

### Sodium bicarbonate-containing systems

The following tests have been conducted, or planned, regarding an inhibitor solution formulation consisting essentially of a water solution containing (in % by weight):

1.66% calcium chloride
5.73% Dequest 2060 inhibitor
0.84% sodium bicarbonate
1.86% methyl formate

Figure 3 shows the effects of the initial solution pH (along the Y-axis) on the length of time (in minutes along the X-axis) required for the beginning of precipitation when the solution is maintained at 41°C. About 3 cc samples of a solution of the above formulation were mixed with enough acid or base to adjust the solution pH to each of the values indicated on the figure. The solutions in small test tubes were kept in a water bath at 41°C until the beginning of precipitation could be seen. For example, in a solution having an initial pH of 7.5 the initial precipitation began at 190 minutes.

Figure 4 shows the effect of temperature (in °C along the Y-axis) on the time (in minutes along the X-axis) required for the beginning of precipitation when a solution of the above formulation with an initial pH of 7.5 is maintained at the indicated temperature. For example, when such a solution was maintained at 41°C the precipitation was initiated at 195 minutes; i.e., a time in substantial agreement with the tests shown in Figure 3.

Figure 5 shows variations with amount of fluid flow (in cubic centimetres along the X-axis) of the concentration in a scale inhibitor (in ppm phosphate ion along the Y-axis) which was deposited, by the present process, within a sand pack through which the fluid is flowed is flowed. The pH of the solution of the above composition was adjusted to an initial value of 7.5. The sand pack consisted of typical Wassen field core material which was initially permeated with an aqueous solution having a salinity equivalent to that of a typical reservoir water. The sand pack had a pore volume of about 75 cc and enough of the inhibitor solution was flowed into the sand pack to displace the synthetic water and permeate the pack. The so-injected solution was allowed to stand overnight. The synthetic reservoir water was then injected into the pack at a rate substantially equivalent to that encountered during the production of such a well while the outflowing fluid was monitored with respect to its concentration of inhibitor. A standard colourmetric test for phosphate ions was used to determine the inhibitor concentration. The phosphate ion concentration in the first 28 cm$^3$ of outflow was 6171 parts per million. Such measurements were continued on samples of the volumes indicated between the points on the figure. After a rapid decline during the first 200 cm$^3$ of outflow, the rate of decline of the inhibitor concentration slowly decreased to about 70 parts per million during the outflowing of 3200 ccs, or more than about 44 pore volumes of fluid.

### Field Test Exemplification

In a well opening into a reservoir at about 1200 metres' depth and having an injectivity receptive to 2 to 3 barrels (of 159 litres) per minute of aqueous liquid the present process can advantageously be applied in the following manner. About 100 to 110 barrels of inhibitor solution of the above composition with its pH adjusted to about 7.5 are injected and displaced ahead of an aqueous liquid compatible with the reservoir water, to ensure a displacement of about 100 barrels of the solution into the reservoir. The well is then shut in overnight and is subsequently returned to fluid production.

It should be noted that the initial pH of a buffer-containing inhibitor solution can be adjusted by initially overriding the effects of the buffering agent by adding a relatively small amount of a strong acid or base such as hydrochloric acid or sodium hydroxide. Where a strong base is added, the initial pH is raised and is not lowered to the value at which it tends to be stabilized by the action of the buffer until that is effected by the relatively slow generation of hydrogen ions by an acid-yielding reactive component of the solution (such as methyl formate). This enables the operator to make only a minor adjustment in the composition of the inhibitor solution in order to correlate the rate of pH reduction with the temperature and injectivity properties of the well by delaying the initial precipitation time for longer than it would have been delayed in a solution of that composition except for the added strong base.

## Claims

1. A well treating process comprising:
compounding an aqueous scale inhibitor-containing solution consisting essentially of water, at least one compound containing scale-inhibiting anions, at least one compound containing multivalent cations, sufficient alkaline material to provide a solution pH exceeding the pH at which a compound composed of those scale-inhibiting anions and multivalent cations will begin to precipitate at the reservoir temperature, and enough of at least one compound which reacts to yield hydrogen ions at a relatively slow rate to subsequently reduce the solution pH to one at which said precipitation will begin; and
injecting the solution into the reservoir at a rate and volume arranged so that (a) substantially all of the solution enters the reservoir before the occurrence of any significant amount of said precipitation and (b) a significant amount of said precipitation occurs while the solution is in a near-well location within the reservoir.

2. The process of claim 1, in which the composition of the scale inhibitor-containing solution is correlated with the temperature and injectivity properties of the reservoir by adjusting the chemistry and/or concentration of the materials dissolved in the solution, and/or including within the solution at least one compound capable of altering the rate at which the solution pH is reduced, to the extent required to ensure that (a) substantially all of the solution can be injected into the reservoir before the occurrence of a significant amount of precipitation but (b) a significant amount of said precipitation will occur within a few hours after the solution has been so injected.

3. The process of claim 1 or 2, in which said scale inhibitor-containing solution contains a buffering system capable of maintaining the rate at which the solution pH is reduced to said precipitation-inducing pH.

4. The process of claim 1, 2 or 3, in which said scale inhibiting anion-containing compound is an organo-phosphorous type of scale inhibitor.

5. The process of claim 1, 2 or 3, in which said scale inhibiting anion-containing compound is a nitrogen-containing phosphonate scale inhibitor.

6. The process of claims 1—5, in which the scale inhibitor-containing solution contains enough sodium bicarbonate to delay said reduction of the solution pH.

7. The process of claims 1—5, in which the scale inhibitor-containing solution contains sufficient glycine to delay the rate of said pH reduction.

## Revendications

1. Un procédé de traitement de puits, selon lequel:
On prépare une solution aqueuse contenant un inhibiteur de dépôts constituée essentiellement d'eau, d'au moins un composé contenant des anions inhibant les dépôts, d'au moins un composé contenant des cations polyvalents, d'assez de matière alcaline pour obtenir un pH de la solution dépassant le pH auquel un composé formé de ces anions inhibant les dépôts et de ces cations polyvalents commencera à précipiter à la température du réservoir, et d'assez d'au moins un composé qui réagit pour donner des ions hydrogène à une vitesse relativement petite pour abaisser ensuite le pH de la solution à un niveau auquel la précipitation commencera; et
on injecte la solution dans le réservoir à un débit et à un volume choisis de manière que (a) le quasitotalité de la solution entre dans le réservoir avant que la précipitation se produise dans une mesure importante quelconque et (b) cette précipitation se produise dans une mesure importante tandis que la solution se trouve à un endroit situé près d'un puits dans le réservoir.

2. Un procédé selon la revendication 1, dans lequel la composition de la solution contenant l'inhibiteur de dépôts est coordonnée avec la température et les propriétés d'injectivité du réservoir par réglage de la chimie et/ou de la concentration des matières dissoutes dans la solution, et/ou par inclusion dans la solution d'au moins un composé capable de modifier la vitesse à laquelle le pH de la solution est abaissé, dans la mesure nécessaire pour assurer que (a) la quasi-totalité de la solution puisse être injectée dans le réservoir avant qu'une quantité importante de précipitation se produise, mais que (b) une quantité importante de cette précipitation se produise en un petit nombre d'heures après que la solution a été ainsi injectée.

3. Un procédé selon la revendication 1 ou 2, dans lequel la solution contenant l'inhibiteur de dépôts contient un système de tamponnage capable de maintenir la vitesse à laquelle le pH de la solution est réduit au pH causant la précipitation.

4. Un procédé selon l'une des revendications 1 à 3, dans lequel le composé contenant des anions inhibant les dépôts est un inhibiteur de dépôts de type organophosphore.

5. Un procédé selon l'une des revendications 1 à 3, dans lequel le composé contenant des anions inhibant les dépôts est un inhibiteur de dépôts phosphonate azoté.

6. Un procédé selon l'une des revendications 1 à 5, dans lequel la solution contenant l'inhibiteur de dépôts contient assez de bicarbonate de sodium pour retarder l'abaissement du pH de la solution

7. Un procédé selon l'une des revendications 1 à 5, dans lequel la solution contenant l'inhibiteur de dépôts contient assez de glycine poru retarder la vitesse de l'abaissement du pH.

## Patentansprüche

1. Verfahren zur Behandlung eines Bohrlochs, in dem man eine wässrige Lösung enthaltend einen Inhibitor für die Ansatzbildung herstellt, welche im wesentlichen Wasser, zumindest eine Verbindung enthaltend Ansatzbildung verhindernde Anionen, zumindest eine Verbindung enthaltend mehrwertige Kationen, ausreichend alkalische Stoffe für einen pH-Wert der Lösung, der den pH-Wert übersteigt, bei dem eine Verbindung aus diesen Ansatzbildung verhindernden Anionen und mehrwertigen Kationen auszufallen beginnt bei der Lagerstättentemperatur und ausreichend zumindest eine Verbindung, die relativ langsam Wasserstoffionen zu liefern vermag, um den pH-Wert der Lösung auf einen solchen abzusenken, daß dei Ausfällung einsetzt, woraufhin man die Lösung in die Lagerstätte mit solcher Geschwindigkeit und in einem solchen Volumen einführt, daß (a) im wesentlichen die gesamte Lösung in die Lagerstätte eingetreten ist, bevor eine solche Ausfällung in nennenswertem Umfang stattfindet, und (b) die Ausfällung in beträchtlichem Ausmaß stattfindet, während die Lösung sich in unmittelbarer Umgebung des Bohrlochs innerhalb der Lagerstätte befindet.

2. Verfahren nach Anspruch 1, wobei die Zusammensetzung der Ansatzbildung verhindernden Lösung in Beziehung gebracht wird mit der Temperatur und den Injektionseigenschaften der Lagerstätten durch Einstellung der Chemie und/oder Konzentration der in der Lösung aufgelösten Stoffe und oder durch Zugabe in die Lösung zumindest einer Verbindung, die die Geschwindigkeit der pH-Wert-Verringerung der Lösung zu verändern vermag, in einem solchen Ausmaß, um zu gewährleisten, daß (a) im wesentlichen die gesamte Lösung in die Lagerstätte injiziert werden kann, bevor die Ausfällung in nennenswertem Ausmaß stattfindet, jedoch (b) die Ausfällung in nennenswertem Ausmaß stattfindet innerhalb weniger Stunden nach dem Injizieren der Lösung.

3. Verfahren nach Anspruch 1 oder 2, wobei die Ansatzbildung verhindernde Lösung ein Puffersystem enthält, welches die Geschwindigkeit, mit der der Lösungs-pH-Wert auf den die Ausfällung hervorrufenden pH-Wert abgesenkt wird, aufrechtzuerhalten vermag.

4. Verfahren nach Anspruch 1, 2 oder 3, worin die die Ansatzbildung verhindernde anionenhaltige Verbindung ein Ansatzbildungs-Inhibitor auf der Basis einer Organophosphorverbindung ist.

5. Verfahren nach Anspruch 1, 2 oder 3, worin die die Ansatzbildung verhindernde anionenhaltige Verbindung ein Inhibitor in Form eines stickstoffhaltigen Phosphonats ist.

6. Verfahren nach Anspruch 1 bis 5, worin die Ansatzbildung verhindernde Lösung ausreichend Natriumbicarbonat enthält, um die Verringerung des Lösungs-pH-Werts zu verzögern.

7. Verfahren nach Anspruch 1 bis 5, worin die die Ansatzbildung verhindernde Lösung ausreichend Glycin enthält, um die Geschwindigkeit der pH-Wert-Verringerung zu verringern.

0 040 442

FIG.1

FIG.3

1

# FIG.2

FIG.4

FIG.5